# EUROPÄISCHE PATENTSCHRIFT

(11) **EP 1 220 726 B1**
(45) Veröffentlichungstag und Bekanntmachung des Hinweises auf die Patenterteilung: **16.07.2003**
(21) Anmeldenummer: 00960267.3
(22) Anmeldetag: 22.09.2000
(51) Int. Cl.: B21K 27/06, B23D 35/00

(54) **UMFORMMASCHINE MIT EINER SCHERVORRICHTUNG**
FORMING MACHINE WITH A CUTTING DEVICE
MACHINE DE FORMAGE A DISPOSITIF DE CISAILLAGE

(30) Priorität: 15.10.1999 CH 188499
(43) Veröffentlichungstag der Anmeldung: 10.07.2002
(73) Patentinhaber: Hatebur Umformmaschinen AG, CH-4153 Reinach (CH)
(72) Erfinder: ZANZERL, Hermann, CH-4305 Olsberg (CH)
(74) Vertreter: Bollhalder, Renato
(86) Internationale Anmeldenummer: CH0000513
(87) Internationale Veröffentlichungsnummer: WO01028711

(56) Entgegenhaltungen:
- DE-A- 1 752 917
- US-A- 5 062 336
- US-A- 5 690 010
- PATENT ABSTRACTS OF JAPAN vol. 012, no. 282 (M-726), 3. August 1988 (1988-08-03) -& JP 63 060038 A (SUMITOMO METAL IND LTD), 16. März 1988 (1988-03-16)

## Beschreibung

Die vorliegende Erfindung bezieht sich auf eine Umformmaschine mit einer Schervorrichtung, wie sie im Oberbegriff des unabhängigen Patentanspruchs 1 definiert ist.

Bei Umformmaschinen mit einer oder mehreren Umformstationen wird der ersten Umformstation oftmals ein von einer Stange abgescherter Abschnitt zur Umformung zugeführt. Die Scherung der Stange erfolgt normalerweise in einer separaten Scherstation mittels eines ortsfesten Stangenmessers und eines dazu verschiebbaren Abschnittmessers, das von einem Scherschlitten hin- und herbewegt wird. Für die Ausbildung des Stangenmessers und des Abschnittmessers sind verschiedene Möglichkeiten bekannt.

Bei Kaltumformmaschinen werden beispielsweise geschlossene Rundmesser als Stangenmesser und Abschnittmesser eingesetzt. Die zu scherende Stange wird in die Öffnung des Stangenmessers und des Abschnittmessers eingeschoben und das Abschnittmesser anschliessend schnell quer zur Stange verschoben, wodurch ein Abschnitt von der Stange abgeschert wird. Ein Nachteil der zwei geschlossenen Rundmesser besteht darin, dass das Einschieben der zu scherenden Stange mit Reibung verbunden ist. Ausserdem sind sie bei Warmumformmaschinen nicht ohne weiteres einsetzbar, da dort eine unnötige Wärmeabführung von der Stange verhindert und das Herausfallen des vorhandenen Zunders nicht behindert werden sollte.

Bei Warmumformmaschinen sind das Stangenmesser und das Abschnittmesser normalerweise als Halbmesser ausgebildet, d.h. als Messer, die nur über einen Teil des Stangenumfangs an der Stange anliegen, wobei die zu scherende Stange während des Scherens zwischen den Halbmessern und Klemmbacken gehalten ist. Nach dem Scheren werden die Klemmbacken zum Vorschieben und Lüften der Stange weggefahren. Zur Zentrierung der Stange ist eine separate, relativ unflexible Zentriereinrichtung vorgesehen. Nachteilhaft ist, dass, falls zur Optimierung des ersten Umformschrittes die Lage des zugeführten Abschnitts bezüglich des Zentrums der ersten Umformstation korrigiert werden muss, zur dadurch notwendigen Neuausrichtung des Zentrums des Abschnittmessers und des Stangenmessers viele Einzelteile, nämlich das Abschnittmesser, das Stangenmesser, die Klemmbacken und die Zentriereinrichtung, neu eingestellt werden müssen.

Unabhängig von einer Umformmaschine ist aus der US-A-5 062 336 eine Schervorrichtung zum Scheren von Stangen bekannt, bei der das ortsfeste Messer und das dazu verschiebbare Messer jeweils aus zwei Halbmessern bestehen.

Ebenfalls unabhängig von einer Umformmaschine ist in der US-A-4 152 959 eine Schervorrichtung zum Scheren von Stangen offenbart, bei der das ortsfeste Messer aus zwei auseinanderspreizbaren Halbmessern besteht, während das dazu verschiebbare Messer als geschlossenes Rundmesser ausgebildet ist. Das Auseinanderspreizen der Halbmesser ist aber sehr beschränkt, so dass das Herausfallen allfällig vorhandenen Zunders behindert wird.

In der US-A-5 690 010 ist eine Schervorrichtung einer Umformmaschine offenbart, die ein geschlitztes Rundmesser, bestehend aus einem als Halbmesser ausgebildeten ortsfesten Stangenmesser und einem dazu bewegbaren Klemmstück, sowie ein mit dem geschlitzten Rundmesser zusammenwirkendes und dazu verschiebbares Abschnittmesser aufweist, das als geschlossenes Rundmesser ausgebildet ist. Das Klemmstück ist zwischen einer die zu scherende Stange klemmenden und einer die zu scherende Stange nicht klemmenden Stellung verstellbar, es ist aber nicht vorgesehen, es ganz von der Stange wegzufahren, so dass das Herausfallen allfällig vorhandenen Zunders behindert wird.

Angesichts der Nachteile der bisher bekannten, oben beschriebenen Schervorrichtungen liegt der Erfindung die folgende Aufgabe zugrunde. Zu schaffen ist eine Umformmaschine mit einer Schervorrichtung der eingangs erwähnten Art, bei der die Schervorrichtung das Einschieben der zu scherenden Stange ohne unnötige Reibung, das Herausfallen allfällig vorhandenen Zunders sowie auf einfache Weise das Einstellen des Zentrums des Abschnittmessers und des Stangenmessers ermöglicht.

Diese Aufgabe wird durch die erfindungsgemässe Vorrichtung gelöst, wie sie im unabhängigen Patentanspruch 1 definiert ist. Bevorzugte Ausführungsvarianten ergeben sich aus den abhängigen Patentansprüchen.

Das Wesen der Erfindung besteht im Folgenden: Eine Umformmaschine umfasst eine Schervorrichtung, die ein geschlitztes Rundmesser, bestehend aus einem als Halbmesser ausgebildeten ortsfesten Stangenmesser und einem dazu bewegbaren Zentrier- und Klemmstück, sowie ein mit dem geschlitzten Rundmesser zusammenwirkendes und dazu verschiebbares Abschnittmesser, das als geschlossenes Rundmesser ausgebildet ist, aufweist. Die Umformmaschine weist ausserdem Steuermittel auf, die derart ausgestaltet sind, dass durch sie das Zentrier- und Klemmstück zwischen einer Zentrierstellung, in der es im Betrieb eine zu scherende Stange ohne zu klemmen zentriert, einer Lüftstellung, in der es ganz von der zu scherenden Stange weggefahren ist, und einer Klemmstellung, in der es die zu scherende Stange klemmt, gesteuert bewegt wird.

Das Zentrieren einer zu scherenden Stange erfolgt erfindungsgemäss durch das Zentrier- und Klemmstück in der Zentrierstellung zusammen mit dem Stangenmesser. Während des Scherens ist die zu scherende Stange zwischen dem Stangenmesser und dem Zentrier- und Klemmstück in der Klemmstellung sowie im Abschnittmesser gehalten. Nach dem Scheren wird das Zentrier- und Klemmstück vom Stangenmesser in die Lüftstellung wegbewegt, so dass die Stange ohne unnötige Reibung wieder vorgeschoben werden kann. Ausserdem ermöglicht das Entfernen des Zentrier- und Klemmstücks von der Stange bei Warmumformmaschinen das Herausfallen von Zunder und verhindert eine vermeidbare Wärmeableitung von der Stange. Sowohl das Zentrieren als auch das Klemmen der Stange erfolgt mittels des Zentrier- und Klemmstücks, so dass auf eine zusätzliche Zentriereinrichtung verzichtet werden kann. Zur Einstellung des Zentrums des Abschnittmessers und des Stangenmessers müssen nur das Abschnittmesser in Form eines geschlossenen Rundmessers und das durch das Stangenmesser und das Zentrier- und Klemmstück gebildete geschlitzte Rundmesser genau positioniert werden.

Im folgenden wird die erfindungsgemässe Umformmaschine mit einer Schervorrichtung unter Bezugnahme auf die beigefügten Zeichnungen anhand eines Ausführungsbeispiels detaillierter beschrieben. Es zeigen:
- Fig. 1 -: eine teilweise geschnitte Ansicht von oben wesentlicher Teile einer an einer Umformmaschine angeordneten Schervorrichtung;

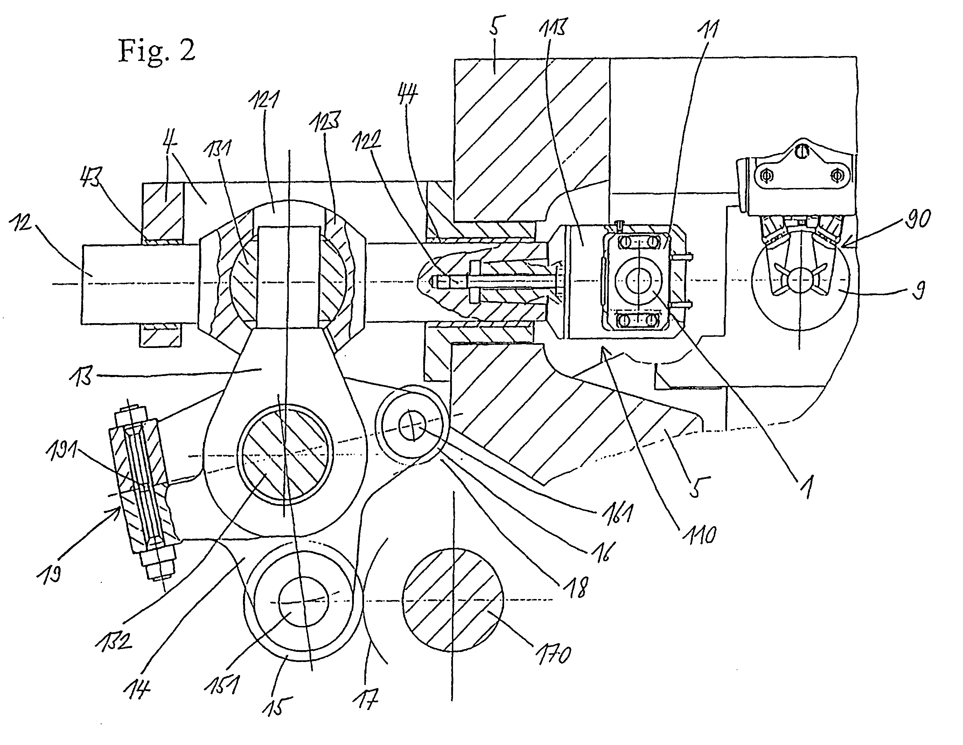

- Fig. 2 -: eine teilweise geschnittene Seitenansicht der Umformmaschine mit Schervorrichtung von Fig. 1, bei der das Abschnittmesser und der Scherschlitten sichtbar sind;

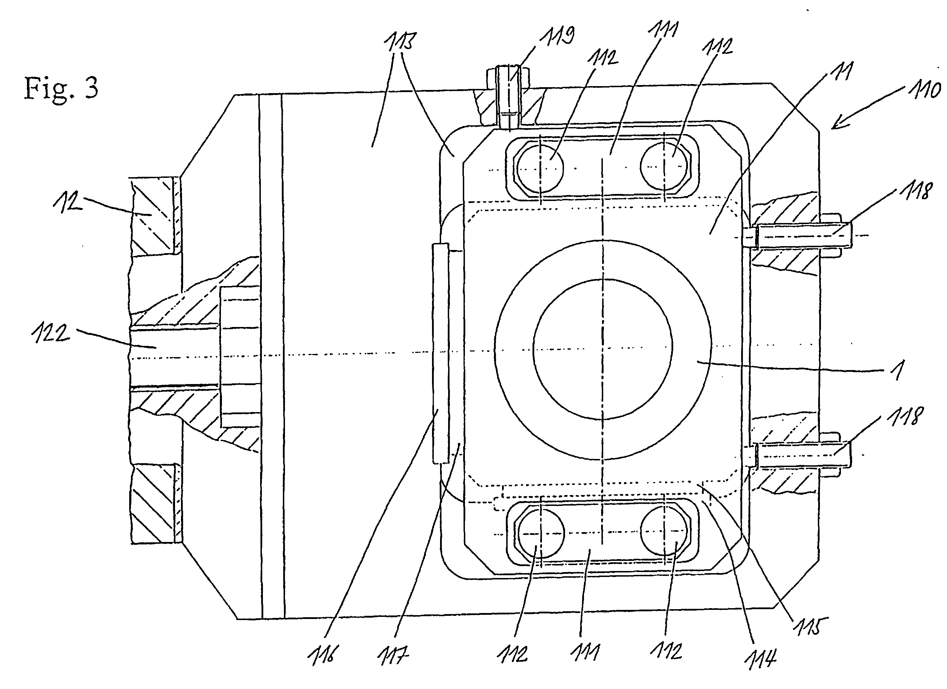

- Fig. 3 -: eine Detailansicht der Anordnung des Abschnittmessers;

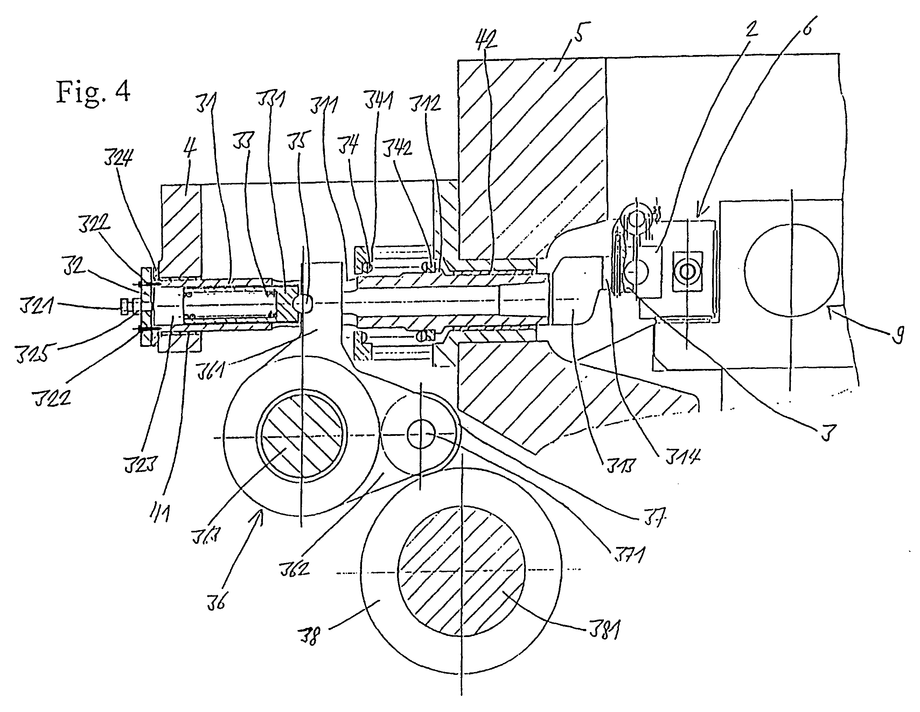

- Fig. 4 -: eine teilweise geschnittene Seitenansicht der Umformmaschine mit Schervorrichtung von Fig. 1, bei der das Stangenmesser, das Zentrier- und Klemmstück und der Zentrier- und Klemmschlitten sichtbar sind; und

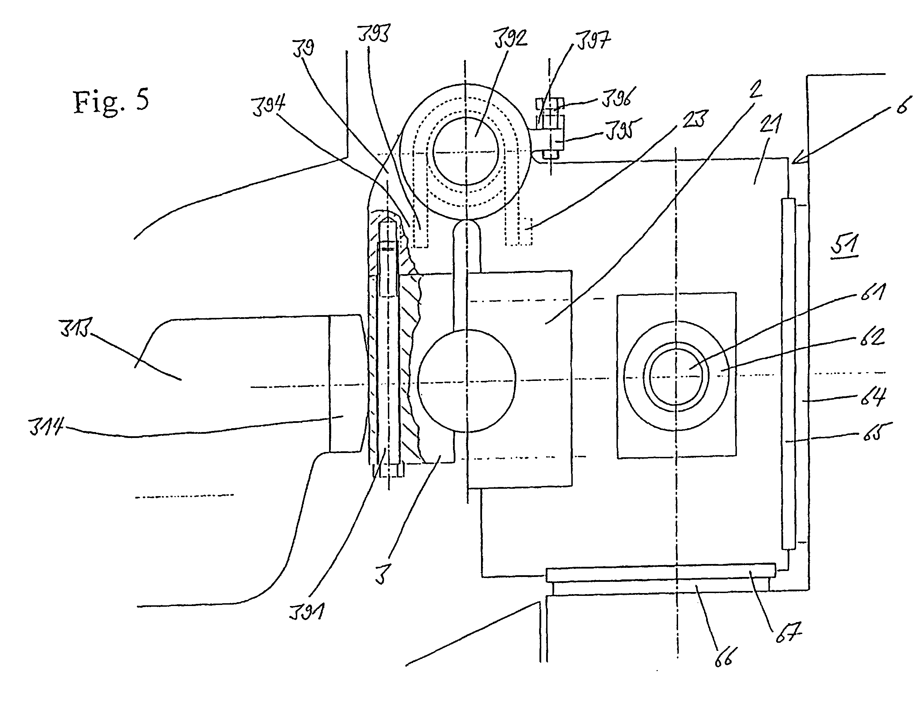

- Fig. 5 -: eine Detailansicht der Anordnung des Stangenmessers und des Zentrier- und Klemmstücks.

### Figur 1

Die dargestellte Umformmaschine mit Schervorrichtung umfasst einen Maschinenkörper 5, an dem über eine Druckplatte 53 ein Amboss 51 angebracht ist. Eine erste Umformstation 9 ist angedeutet. Vor dem Amboss 51 ist eine Scher- und Ladekassette 6 angeordnet, die auf verschiedene Arten lösbar am Amboss 51 oder am Maschinenkörper 5 befestigt sein kann, beispielsweise mittels Schrauben oder hydraulischen Zugoder Druckelementen. Die Scher- und Ladekassette 6 weist ein Stangenmesser 2 in Form eines halbzylinderförmigen Halbmessers auf, das an einem Stangenmesserträger 21 angebracht ist. Zwischen dem Stangenmesser 2 und dem Stangenmesserträger 21 ist ein Verstellkeil 22 angeordnet, der zur Längsverschiebung des Stangenmessers 2 zur Einstellung des Scherspalts zwischen dem Stangenmesser 2 und einem davor plazierten Abschnittmesser 1 dient. Im Stangenmesserträger 21 ist ein Ladestift 61 angeordnet, der mittels einer an einer Lochmutter 62 ansetzenden Druckfeder 63 gegen eine Ladesteuerstange 8 gedrückt wird. Zur Zuführung einer zu scherenden Stange erstreckt sich in Längsrichtung hinter dem Stangenmesser 2 ein Führungsrohr 7, durch das hindurch die Stange in das Stangenmesser 2 und das Abschnittmesser 1 vorgeschoben werden kann, und zwar maximal so weit, bis sie an einem Stangenanschlag 52 anschlägt, der am Maschinenkörper 5 befestigt ist.

Das Abschnittmesser 1 ist als geschlossenes Rundmesser ausgebildet, das in einem Abschnittmesserhalter 11 angebracht ist, der an einem Messerkopf 113 abnehmbar befestigt ist. Das Abschnittmesser 1, der Abschnittmesserhalter 11 und der Messerkopf 113 sind Teil einer Messerkopfkassette 110, welche mittels einer Befestigungsschraube 122 lösbar an einem verschiebbaren Scherschlitten 12 befestigt ist, mit welchem das Abschnittmesser 1 hin- und herbewegt wird, und zwar von einer Position vor dem Stangenmesser 2 zu einer Position vor dem Ladestift 61 und wieder zurück. Für den weiter unten erläuterten Antrieb des Scherschlittens 12 ist an diesem ein Gleitsteinlager 123 mit einem Scherantriebshebelloch 121 vorgesehen.

Während des Scherens ist die zu scherende Stange einerseits im Abschnittmesser 1 und anderseits zwischen dem Stangenmesser 2 und einem gegenüberliegenden Zentrier- und Klemmstück 3 in der Klemmstellung gehalten. Das Zentrier- und Klemmstück 3 liegt an einer Zentrier- und Klemmstückdruckplatte 314 an, die an einem Zentrier- und Klemmschlittenkopf 313 eines Zentrier- und Klemmschlittens 31 angebracht ist. Für den weiter unten erläuterten Antrieb des Zentrierund Klemmschlittens 31 ist an diesem ein Steuerhebelloch 311 vorgesehen. An dem dem Zentrier- und Klemmschlittenkopf 313 abgewandten Ende des Zentrier- und Klemmschlittens 31 ist eine Hubbegrenzungsplatte 32 befestigt, deren Wirkungsweise ebenfalls weiter unten erläutert wird.

Der Scherschlitten 12 und der Zentrier- und Klemmschlitten 31 sowie die dazugehörigen Antriebe sind in einem am Maschinenkörper 5 verankerten Kasten 4 angeordnet, wobei der Scherschlitten 12 in Lagerbüchsen 43, 44 und der Zentrierund Klemmschlitten 31 in Lagerbüchsen 41, 42 in der Kastenwand verschiebbar gelagert sind.

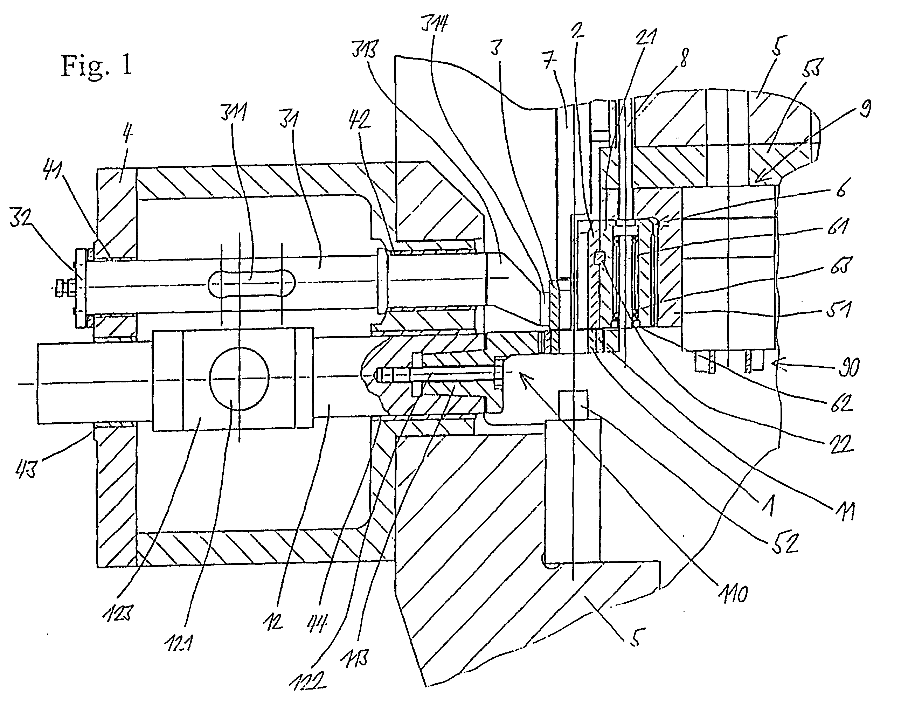

Zum Abscheren eines Abschnitts von der zu scherenden Stange wird das Zentrier- und Klemmstück 3 zunächst zu Beginn des Einschiebens kurz gegen die zu scherende Stange in die Zentrierstellung geführt, um diese ohne zu klemmen zu zentrieren. Die Stange kann dann optimal in das geschlossene Abschnittmesser 1 eingeführt werden. Anschliessend wird das Zentrier- und Klemmstück 3 während des weiteren Einschiebens der zu scherenden Stange in die Öffnung des Abschnittmessers 1 von der zu scherenden Stange in die Lüftstellung weggefahren, d.h. gelüftet, um unnötige Reibung und nachteiligen Wärmeverlust der Stange zu verhindern und das Herausfallen von allfälligem Zunder zu begünstigen. Ist die Stange im gewünschten Mass vorgeschoben, wird das Zentrierund Klemmstück 3 an die zu scherende Stange in die Klemmstellung gedrückt, um diese während des eigentlichen Scherens zu klemmen. Das Scheren erfolgt durch eine schnelle Verschiebung des Abschnittmessers 1 von der Position vor dem Stangenmesser 2 zu der Position vor dem Ladestift 61. Der abgescherte Abschnitt wird schliesslich vom mittels der Ladesteuerstange 8 nach vorne gestossenen Ladestift 61 aus dem Abschnittmesser 1 in eine Quertransportzange 90 gestossen und von dieser zur ersten Umformstation 9 transportiert. In Fig. 1 befindet sich die Quertransportzange 90 bei der ersten Umformstation 9. Das Zentrier- und Klemmstück 3 wird, nachdem der Abschnitt abgeschert ist, von der zu scherenden Stange weggefahren, und das Abschnittmesser 1 wird wieder zur Position vor dem Stangenmesser 2 zurückbewegt.

Für die gesamte weitere Beschreibung gilt folgende Festlegung. Sind in einer Figur zum Zweck zeichnerischer Eindeutigkeit Bezugszeichen enthalten, aber im unmittelbar zugehörigen Beschreibungstext nicht erläutert, so wird auf deren Erwähnung in vorangehenden Figurenbeschreibungen Bezug genommen.

### Figur 2

Es ist hier ersichtlich, dass der Antrieb des Scherschlittens 12 über einen Scherantriebshebel 13 erfolgt, der in das Scherantriebshebelloch 121 im Gleitsteinlager 123 ragt und dort von einem dicht anliegenden Gleitstein 131 umgeben ist, welcher sich im Gleitsteinlager 123 drehen kann. Der Scherantriebshebel 13 ist über eine Überlastsicherung 19 mit einer Sollbruchstelle 191 fest mit einem Doppelrollenhebel 14 verbunden, wobei der Scherantriebshebel 13 und der Doppelrollenhebel 14 um eine gemeinsame Drehachse 132 drehbar sind. Am Doppelrollenhebel 14 ist einerseits eine um eine Drehachse 151 drehbare Scherrolle 15 und anderseits eine um eine Drehachse 161 drehbare Gegenrolle 16 angeordnet. Die Scherrolle 15 liegt an einer hier nur angedeuteten Scherkurve 17 an, während die Gegenrolle 16 an einer hier nur angedeuteten Gegenkurve 18 anliegt, wobei die beiden Kurven mittels einer Steuerwelle 170 rotiert werden. Durch eine entsprechende Ausbildung der Scherkurve 17 und der Gegenkurve 18 kann die gewünschte Hin- und Herbewegung des Scherschlittens 12 und damit des Abschnittmessers 1 erreicht werden.

Ist der Widerstand der zu scherenden Stange zu gross, bricht die Überlastsicherung 19 an der Sollbruchstelle 191 und der Scherantriebshebel 13 wird vom Doppelrollenhebel 14 entkoppelt.

Ausserdem ist hier vor der ersten Umformstation 9 die erste Quertransportzange 90 dargestellt, mit welcher die aus dem Abschnittmesser 1 ausgestossenen abgescherten Stangenabschnitte in die erste Umformstation 9 transportiert werden.

### Figur 3

Der das Abschnittmesser 1 tragende Abschnittmesserhalter 11 und somit das Abschnittmesser 1 selbst ist in x- und y-Richtung mittels je einer Einpassplatte 116 bzw. 114 und zusätzlich je einer Korrekturplatte 117 bzw. 115 im Messerkopf 113 in der Messerkopfkassette 110 genau positionierbar. Die Einpassplatten 114, 116 werden am Messerkopf 113 fest montiert und danach nicht mehr entfernt, während Korrekturplatten 115, 117 mit einer bestimmten Dicke am Abschnittmesserhalter 11 oder an den Einpassplatten 114, 116 auswechselbar befestigt werden. Mittels Anstellschrauben 118, 119 wird der Abschnittmesserhalter 11 mit den Korrekturplatten 115, 117 gegen die Einpassplatten 114, 116 gedrückt und so am Messerkopf 113 fixiert. Danach wird der Abschnittmesserhalter 11 über zwei Befestigungsbrücken 111 mittels Befestigungsschrauben 112 stabil mit dem Messerkopf 113 verbunden, so dass die bei der Scherung auftretenden hohen Kräfte zu keinem Lösen des Abschnittmesserhalters 11 führen.

Um mit den Korrekturplatten 115, 117 in x- und y-Richtung reproduzierbare Positionen zu erreichen, müssen anfänglich bei Montage der Maschine Referenz-Korrekturplatten 115, 117 mit definierter Dicke ±0 eingesetzt und entsprechend dem Basis-Zentrum der Einzugsachse die Dicken der Einpassplatten 114, 116 bestimmt werden. Zur Einstellung der gewünschten x- und y-Position des Abschnittmessers 1 müssen einfach eine oder beide Referenz-Korrekturplatten 115, 117 durch Korrekturplatten 115, 117 entsprechender Dicke ersetzt werden, die einem Set von Korrekturplatten mit z.B. in ± 1/10, 1/2 oder 1 mm-Schritten sich unterscheidenden Dicken entnommen werden könnten.

### Figur 4

Der Zentrier- und Klemmschlitten 31 ist mittels einer in einem Klemmfedergehäuse 341 angeordneten Klemmfeder 34, die an einer Ringschulter 312 des Zentrier- und Klemmschlittens 31 ansetzt, gegen das Stangenmesser 2 hin vorgespannt. Befindet sich zwischen dem Zentrier- und Klemmstück 3 und dem Stangenmesser 2 keine Stange, begrenzt eine mittels Befestigungsschrauben 322 am Zentrier- und Klemmschlitten 31 angebrachte Hubbegrenzungsplatte 32 das Verschieben des Zentrier- und Klemmschlittens 31 in Richtung Stangenmesser 2, indem sie an einem ringförmigen Hubbegrenzungsanschlag 324 am Kasten 4 anschlägt. Auf diese Weise wird verhindert, dass sich das Zentrier- und Klemmstück 3 und das Stangenmesser 2 berühren.

Der Antrieb des Zentrier- und Klemmschlittens 31 erfolgt über einen in das Steuerhebelloch 311 ragenden Steuerarm 361 eines Steuerhebels 36, der um eine Drehachse 363 drehbar ist. An einem Rollenarm 362 des Steuerhebels 36 ist eine Steuerrolle 37 um eine Drehachse 371 drehbar. Die Steuerrolle 37 liegt an einer Steuerkurve 38 an, die mittels einer Steuerwelle 381 rotiert wird.

Die Bewegung des Steuerarms 361 wird über einen Gelenkzapfen 35 auf ein Druckfedergehäuse 331 übertragen, das über ein Zwischenstück 323 gegen eine in der Hubbegrenzungsplatte 32 angeordnete Verstellschraube 321 drückt. Eine im Druckfedergehäuse 331 angeordnete, sich am Zwischenstück 323 abstützende Druckfeder 33 sowie die Klemmfeder 34 üben auf den Steuerhebel 36 ein Drehmoment aus, so dass die Steuerrolle 37 permanent gegen die Steuerkurve 38 gedrückt wird. Die Steuerkurve 38 wirkt so über die Steuerrolle 37, den Steuerhebel 36, den Gelenkzapfen 35, das Druckfedergehäuse 331, das Zwischenstück 323, die Verstellschraube 321 und die Hubbegrenzungsplatte 32 auf den Zentrier- und Klemmschlitten 31 in zu der Klemmfeder 34 entgegengesetzter Richtung. Durch eine entsprechende Ausbildung der Steuerkurve 33 kann die gewünschte Hin- und Herbewegung des Zentrier- und Klemmschlittens 31 und damit des Zentrier- und Klemmstücks 3 erreicht werden.

Mittels der Verstellschraube 321, die mittels einer Fixiermutter 325 blockierbar ist, kann der Abstand des Zentrierund Klemmstücks 3 vom Stangenmesser 2 so eingestellt werden, dass das Zentrier- und Klemmstück 3 und das Stangenmesser 2 gemeinsam eine kreiszylindrische Öffnung begrenzen. Eine derartige Einstellung kann öfters erforderlich sein, weil, wie unten erläutert wird, die Lage des Stangenmessers 2 in x-Richtung variiert.

### Figur 5

Es ist hier ersichtlich, dass das Zentrier- und Klemmstück 3 mittels einer Befestigungsschraube 391 an einem Zentrierund Klemmstückträger 39 angebracht ist. Der Zentrier- und Klemmstückträger 39 ist über einen Gelenkzapfen 392 drehbar mit dem Stangenmesserträger 21 verbunden, an dem das Stangenmesser 2 angebracht ist. Mittels einer Torsionsfeder 393, die an einer Federanlage 394 am Zentrier- und Klemmstückträger 39 und an einer Federanlage 23 am Stangenmesserträger 21 ansetzt, ist der Zentrier- und Klemmstückträger 39 bezüglich des Stangenmesserträgers 21 derart vorgespannt, dass das Zentrier- und Klemmstück 3 vom Stangenmesser 2 weg gegen die am Zentrier- und Klemmschlitten 31 angebrachte Zentrier- und Klemmstückdruckplatte 314 gedrückt wird. Die Lüft-, Zentrier- und Klemmbewegungen des Zencrier- und Klemmstücks 3 können so kraftschlüssig eingeleitet werden.

Die abnehmbare Scher- und Ladekassette 6 mit dem Stangenmesserträger 21 ist in x- und y-Richtung mittels je einer Einpassplatte 64 bzw. 66 und zusätzlich je einer Korrekturplatte 65 bzw. 67 am Amboss 51 genau positionierbar. Die Einpassplatten 64, 66 werden am Amboss 51 fest montiert und danach nicht mehr entfernt, während Korrekturplatten 65, 67 mit einer bestimmten Dicke am Stangenmesserträger 21 oder an den Einpassplatten 64, 66 auswechselbar befestigt werden.

Um mit den Korrekturplatten 65, 67 in x- und y-Richtung reproduzierbare Positionen zu erreichen, müssen anfänglich bei Montage der Maschine Referenz-Korrekturplatten 65, 67 mit definierter Dicke ±0 eingesetzt und entsprechend dem Basis-Zentrum der Einzugsachse die Dicken der Einpassplatten 64, 66 bestimmt werden. Zur Einstellung der gewünschten x- und y-Position des Stangenmessers 2 müssen einfach eine oder beide Referenz-Korrekturplatten 65, 67 durch Korrekturplatten 65, 67 entsprechender Dicke ersetzt werden, die einem Set von Korrekturplatten mit z.B. in ± 1/10, 1/2 oder 1 mm-Schritten sich unterscheidenden Dicken entnommen werden könnten.

Zum Erleichtern des Einsetzens der Scher- und Ladekassette 6 zwischen den Amboss 51 bzw. die Einpassplatten 64, 66 und die Zentrier- und Klemmstückdruckplatte 314 ist an einem Fortsatz 395 des Zentrier- und Klemmstückträgers 39 eine Stellschraube 396 zur Begrenzung des Öffnungswinkels zwischen dem Zentrier- und Klemmstückträger 39 und dem Stangenmesserträger 21 angebracht, die mittels einer Fixiermutter 397 blockierbar ist.

Zu der vorbeschriebenen Umformmaschine mit Schervorrichtung sind weitere konstruktive Variationen realisierbar. Hier ausdrücklich erwähnt seien noch:
- Anstatt die Einpassplatten 114, 116 am Messerkopf 113 und die Korrekturplatten 115, 117 am Abschnittmesserhalter 11 oder an den Einpassplatten 114, 116 zu montieren, könnten die Einpassplatten 114, 116 auch am Abschnittmesserhalter 11 und die Korrekturplatten 115, 117 am Messerkopf 113 oder an den Einpassplatten 114, 116 befestigt werden.
- Anstatt die Einpassplatten 64, 66 am Amboss 51 und die Korrekturplatten 65, 67 am Stangenmesserträger 21 oder an den Einpassplatten 64, 66 zu montieren, könnten die Einpassplatten 64, 66 auch am Stangenmesserträger 21 und die Korrekturplatten 65, 67 am Amboss 51 oder an den Einpassplatten 64, 66 befestigt werden.
- Die Scher- und Ladekassette 6 kann über die in x- und y-Richtung angeordneten Einpassplatten 64, 66 und Korrekturplatten 65, 67 auch auf verschiedene Arten an einem L-förmigen Kassettenträger lösbar befestigt sein. Der Kassettenträger mit der Scher- und Ladekassette 6 kann ebenfalls auf verschiedene Arten lösbar am Amboss 51 oder am Maschinenkörper 5 befestigt sein, beispielsweise mittels Schrauben oder hydraulischen Zug- oder Druckelementen.
- Die Verbindung zwischen Zentrier- und Klemmstückdruckplatte 314 und Zentrier- und Klemmstück 3 kann auch formschlüssig ausgebildet werden. Die Vorspannung des Zentrier- und Klemmstückträgers 3 bezüglich des Stangenmesserträgers 21 würde dann nicht mehr benötigt.
- Anstatt den Abstand des Zentrier- und Klemmstücks 3 vom Stangenmesser 2 mittels der Verstellschraube 321 einzustellen, kann dies auch durch eine motorisch angetriebene Gewindespindel geschehen.
- Die Messerkopfkassette 110 kann anstatt mittels der Befestigungsschraube 122 auch auf eine andere Weise lösbar am Scherschlitten 12 befestigt werden, beispielsweise mittels hydraulischen Zug- oder Druckelementen.

## Patentansprüche

1. Umformmaschine mit einer Schervorrichtung, die ein geschlitztes Rundmesser, bestehend aus einem als Halbmesser ausgebildeten ortsfesten Stangenmesser (2) und einem dazu bewegbaren Zentrier- und Klemmstück (3), sowie ein mit dem geschlitzten Rundmesser zusammenwirkendes und dazu verschiebbares Abschnittmesser (1) aufweist, das als geschlossenes Rundmesser ausgebildet ist, **dadurch gekennzeichnet, dass** sie Steuermittel (38) aufweist, die derart ausgestaltet sind, dass durch sie das Zentrier- und Klemmstück (3) zwischen einer Zentrierstellung, in der es im Betrieb eine zu scherende Stange ohne zu klemmen zentriert, einer Lüftstellung, in der es ganz von der zu scherenden Stange weggefahren ist, und einer Klemmstellung, in der es die zu scherende Stange klemmt, gesteuert bewegt wird.

2. Umformmaschine nach Anspruch 1, **dadurch gekennzeichnet, dass** das Abschnittmesser (1) in einem Abschnittmesserhalter (11) angeordnet ist, der mittels je einer Einpassplatte (114, 116) pro Richtung und vorzugsweise zusätzlich je einer Korrekturplatte (115, 117) pro Richtung bezüglich einer geforderten Lage einer zu scherenden Stange in zwei Richtungen senkrecht zu der zu scherenden Stange genau positionierbar ist.

3. Umformmaschine nach Anspruch 2, **dadurch gekennzeichnet, dass** der Abschnittmesserhalter (11) an einem Messerkopf (113) abnehmbar befestigt ist, welcher an einem verschiebbaren Scherschlitten (12) angebracht ist.

4. Umformmaschine nach Anspruch 3, **dadurch gekennzeichnet, dass** das Abschnittmesser (1), der Abschnittmesserhalter (11) und der Messerkopf (113) Teil einer abnehmbaren Messerkopfkassette (110) sind.

5. Umformmaschine nach einem der Ansprüche 1 bis 4, **dadurch gekennzeichnet, dass** die Steuermittel eine Steuerkurve (38) umfassen, die so geformt ist, dass das Zentrierund Klemmstück (3) zunächst zu Beginn des Einschiebens kurz gegen die zu scherende Stange in die Zentrierstellung geführt wird, um diese ohne zu klemmen zu zentrieren, anschliessend während des weiteren Einschiebens der zu scherenden Stange in die Öffnung des Abschnittmessers (1) von der zu scherenden Stange in die Lüftstellung weggefahren wird, dann ganz an die zu scherende Stange in die Klemmstellung geführt wird, um diese während des eigentlichen Scherens zu klemmen, und schliesslich wieder von der zu scherenden Stange weggefahren wird.

6. Umformmaschine nach Anspruch 5, **dadurch gekennzeichnet, dass** das Zentrier- und Klemmstück (3) mittels. eines Zentrier- und Klemmschlittens (31) bewegbar ist, der von der Steuerkurve (38) gesteuert ist.

7. Umformmaschine nach einem der Ansprüche 1 bis 6, **dadurch gekennzeichnet, dass** das Zentrier- und Klemmstück (3) an einem Zentrier- und Klemmstuckträger (39) angebracht ist, der bewegbar, vorzugsweise drehbar, mit einem Stangenmesserträger (21) verbunden ist, an dem das Stangenmesser (2) angebracht ist.

8. Umformmaschine nach Anspruch 7, **dadurch gekennzeichnet, dass** der Zentrier- und Klemmstückträger (39) derart vorgespannt ist, dass das Zentrier- und Klemmstück (3) vom Stangenmesser (2) weg gegen eine am Zentrier- und Klemmschlitten (31) angebrachte Zentrier- und Klemmstückdruckplatte (314) gedrückt wird.

9. Umformmaschine nach einem der Ansprüche 1 bis 8, **dadurch gekennzeichnet, dass** das durch das Stangenmesser (2) und das Zentrier- und Klemmstück (3) gebildete geschlitzte Rundmesser mittels je einer Einpassplatte (64, 66) pro Richtung und vorzugsweise zusätzlich je einer Korrekturplatte (65, 67) pro Richtung bezüglich einer geforderten Lage einer zu scherenden Stange in zwei Richtungen senkrecht zu der zu scherenden Stange genau positionierbar ist.

10. Umformmaschine nach einem der Ansprüche 1 bis 9, **dadurch gekennzeichnet, dass** das Stangenmesser (2), das Zentrier- und Klemmstück (3) und gegebenenfalls der Zentrier- und Klemmstückträger (39) und der Stangenmesserträger (21) in einer abnehmbaren Scher- und Ladekassette (6) angeordnet sind.

11. Umformmaschine nach einem der Ansprüche 1 bis 10, **dadurch gekennzeichnet, dass** sie eine Warmumformmaschine ist.

## Claims

1. A forming machine with a shearing device, which has a slit round cutter, comprising a fixed bar cutter (2) which is designed as a half-cutter and a centering and clamping piece (3) which is movable with respect to said bar cutter, and also a cropping cutter (1) which interacts with the slit round cutter, is displaceable with respect to it and is designed as a closed round cutter, wherein the forming machine comprises control means (38), which are formed in such a way that the centering and clamping piece (3) is moved in a controlled manner between a centering position, in which, during operation, it centers a bar to be sheared without clamping it, a release position, in which it is moved completely away from the bar to be sheared, and a clamping position, in which it clamps the bar to be sheared.

2. The forming machine as claimed in claim 1, wherein the cropping cutter (1) is arranged in a cropping cutter holder (11), which can be accurately positioned with respect to a required position of a bar to be sheared in two directions perpendicularly with respect to the bar to be sheared by means of a respective fitting plate (114, 116) for each direction and preferably in addition a respective correction plate (115, 117) for each direction.

3. The forming machine as claimed in claim 2, wherein the cropping cutter holder (11) is removably fastened on a cutter head (113), which is fitted on a displaceable shearing carriage (12).

4. The forming machine as claimed in claim 3, wherein the cropping cutter (1), the cropping cutter holder (11) and the cutter head (113) are part of a removable cutter head module (110).

5. The forming machine as claimed in one of claims 1 to 4, wherein the control means comprise a control cam (38) which is shaped such that, at the beginning of pushing-in, the centering and clamping piece (3) is initially guided briefly toward the bar to be sheared, into the centering position, in order to center said bar without clamping it, subsequently, during the further pushing-in of the bar to be sheared into the opening of the cropping cutter (1), said centering and clamping piece is moved away from the bar to be sheared into the release position, then it is guided right up to the bar to be sheared, into the clamping position, in order to clamp said bar during the actual shearing, and finally it is moved away again from the bar to be sheared.

6. The forming machine as claimed in claim 5, wherein the centering and clamping piece (3) is movable by means of a centering and clamping carriage (39), which is controlled by the control cam (38).

7. The forming machine as claimed in one of claims 1 to 6, wherein the centering and clamping piece (3) is fitted on a centering and clamping-piece carrier (39) which is connected movably, preferably pivotably, to a bar cutter carrier (21) on which the bar cutter (2) is fitted.

8. The forming machine as claimed in claim 7, wherein the centering and clamping-piece carrier (39) is prestressed in such a way that the centering and clamping piece (3) is pressed away from the bar cutter (2) against a centering and clamping-piece pressure plate (314) fitted on the centering and clamping carriage (31).

9. The forming machine as claimed in one of claims 1 to 8, wherein the slit round cutter formed by the bar cutter (2) and the centering and clamping piece (3) can be accurately positioned with respect to a required position of a bar to be sheared in two directions perpendicularly with respect to the bar to be sheared by means of a respective fitting plate (64, 66) for each direction and preferably in addition a respective corrections plate (65, 67) for each direction.

10. The forming machine as claimed in one of claims 1 to 9, wherein the bar cutter (2), the centering and clamping piece (3) and, if appropriate, the centering and clamping-piece carrier (39) and the bar cutter carrier (21) are arranged in a removable shearing and loading module (6).

11. The forming machine as claimed in one of claims 1 to 10, wherein it is a hot forming machine.

## Revendications

1. Machine de formage avec un dispositif de cisaillage, qui présente une lame ronde fendue, se composant d'une lame immobile (2) pour barres, sous forme d'une lame demi-cercle, et d'une pièce de centrage et de serrage (3) mobile par rapport à celle-ci, ainsi qu'une lame de coupe (1) mobile par rapport à celle-ci et coopérant avec la lame ronde fendue, qui a la forme d'une lame ronde fermée, **caractérisée en ce qu'**elle présente des moyens de commande (38), qui sont configurés de telle façon que la pièce de centrage et de serrage (3) soit commandée par ceux-ci entre une position de centrage, dans laquelle elle centre en fonctionnement une barre à couper sans la serrer, une position retirée, dans laquelle elle est complètement écartée de la barre à couper, et une position de serrage, dans laquelle elle serre la barre à couper.

2. Machine de formage selon la revendication 1, **caractérisée en ce que** la lame de coupe (1) est disposée dans un support de lame de coupe (11), qui peut être positionné avec précision par rapport à une position requise d'une barre à couper, dans deux directions perpendiculaires à la barre à couper, au moyen d'une plaque d'ajustement (114, 116) par direction et de préférence en outre au moyen d'une plaque de correction (115, 117) par direction.

3. Machine de formage selon la revendication 2, **caractérisée en ce que** le support de lame de coupe (11) est fixé de façon amovible à une tête porte-lame (113), qui est placée sur un chariot de cisaille mobile (12).

4. Machine de formage selon la revendication 3, **caractérisée en ce que** la lame de coupe (1), le support de lame de coupe (11) et la tête porte-lame (113) font partie d'une cassette de tête porte-lame démontable (110).

5. Machine de formage selon l'une quelconque des revendications 1 à 4, **caractérisée en ce que** les moyens de commande comprennent une came de commande (38), qui est profilée de telle façon que la pièce de centrage et de serrage (3) soit d'abord, au commencement de l'approche, conduite brièvement contre la barre à couper, afin de centrer celle-ci sans la serrer, qu'elle soit ensuite, amenée en position retirée à l'écart de la barre à couper pendant la poursuite de l'introduction de la barre à couper dans l'ouverture de la lame de coupe (1), et qu'elle soit alors conduite dans la position de serrage entièrement contre la barre à serrer, afin de serrer celle-ci pendant la coupe proprement dite, et enfin qu'elle soit à nouveau écartée de la barre à couper.

6. Machine de formage selon la revendication 5, **caractérisée en ce que** la pièce de centrage et de serrage (3) est mobile au moyen d'un chariot de centrage et de serrage (31), qui est commandé par la came de commande (38).

7. Machine de formage selon l'une quelconque des revendications 1 à 6, **caractérisée en ce que** la pièce de centrage et de serrage (3) est montée sur un support (39) de pièce de centrage et de serrage, qui est relié de façon mobile, de préférence rotative, à un support (21) de lame à barres, sur lequel la lame à barres (2) est montée.

8. Machine de formage selon la revendication 7, **caractérisée en ce que** le support de pièce de centrage et de serrage (39) est précontraint de telle manière que la pièce de centrage et de serrage (3) soit écartée de la lame à barres (2) et pressée contre une plaque de pression de la pièce de centrage et de serrage (314) montée sur le chariot de centrage et de serrage (31).

9. Machine de formage selon l'une quelconque des revendications 1 à 8, **caractérisée en ce que** la lame ronde fendue formée par la lame à barres (2) et la pièce de centrage et de serrage (3) peut être positionnée avec précision par rapport à une position requise d'une barre à couper, dans deux directions perpendiculaires à la barre à couper, au moyen d'une plaque d'ajustement (64, 66) par direction et de préférence en plus au moyen d'une plaque de correction (65, 67) par direction.

10. Machine de formage selon l'une quelconque des revendications 1 à 9, **caractérisée en ce que** la lame à barres (2), la pièce de centrage et de serrage (3) et le cas échéant le support de pièce de centrage et de serrage (39) et le support de lame à barres (21) sont disposés dans une cassette de cisaillage et de chargement (6) démontable.

11. Machine de formage selon l'une quelconque des revendications 1 à 10, **caractérisée en ce qu'**elle est une machine de formage à chaud.
